(19) Europäisches Patentamt / European Patent Office / Office européen des brevets

(11) **EP 2 840 903 B1**

(12) **EUROPEAN PATENT SPECIFICATION**

(45) Date of publication and mention
of the grant of the patent:
**02.12.2015 Bulletin 2015/49**

(21) Application number: **13716290.5**

(22) Date of filing: **15.04.2013**

(51) Int Cl.:
*A23F 3/42* (2006.01)     *A23F 3/16* (2006.01)

(86) International application number:
**PCT/EP2013/057758**

(87) International publication number:
**WO 2013/160131 (31.10.2013 Gazette 2013/44)**

(54) **A PROCESS FOR AROMA RECOVERY FROM TEA**

VERFAHREN ZUR AROMARÜCKGEWINNUNG AUS TEE

PROCÉDÉ DE RÉCUPÉRATION D'ARÔME À PARTIR DE THÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2012  IN MM13092012**
**06.06.2012  EP 12170944**

(43) Date of publication of application:
**04.03.2015  Bulletin 2015/10**

(73) Proprietors:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London, Greater London EC4Y 0DY (GB)**
Designated Contracting States:
**CY GB IE MT**

(72) Inventors:
• **GUPTA, Anshul**
**Whitefield**
**Bangalore 560 066 (IN)**
• **PURUSHOTHAMAN, Poovizhi Ponnammal**
**Whitefield**
**Bangalore 560 066 (IN)**
• **SINGH, Gurmeet**
**Whitefield**
**Bangalore 560 066 (IN)**

(74) Representative: **van den Brom, Coenraad Richard**
**Unilever Patent Group**
**Olivier van Noortlaan 120**
**3133 AT Vlaardingen (NL)**

(56) References cited:
**WO-A1-2009/059928**

• **DATABASE WPI Week 200647 Thomson Scientific, London, GB; AN 2006-454783 XP002639299, & CN 1 718 030 A (LANCANGJIANG BEER ENTERPRISE CO LTD) 11 January 2006 (2006-01-11)**

## Description

### Technical Field

The present invention relates to a process for producing a tea aroma. More particularly the invention relates to a process for recovering aroma from tea juice.

### Background of the invention

Beverages based on the tea plant have been popular throughout the world for many hundreds of years. Therefore for researchers it has always been an interesting field for developing tea products with different formats to satisfy consumer needs, for example new sensory experiences such as taste, aroma, colour characteristics of the liquor etc.
Black tea, White tea, Green tea and Oolong tea are processed differently to provide tea with distinct sensorials. Ready to drink (liquid) tea products are gaining popularity as consumers do not have to invest in time for brewing tea. Various processing methods using tea leaves for making tea drinks are known in the art.
WO 2009/059924 (UNILEVER) discloses a process comprising the steps of: expressing juice from fresh tea leaves thereby to produce leaf residue and tea juice, wherein the amount of expressed juice is between 10 and 300 ml per kg of the fresh tea leaves; and processing the leaf residue to produce leaf tea and/or a tea extract.
WO 2009/098231 (UNILEVER) discloses a process for manufacturing a tea product. The process comprises the step of combining tea juice expressed from a first supply of fresh tea leaves with leaf tea from a second supply of fresh tea leaves and/or with tea solids extracted from the leaf tea.
Production of instant tea from the juice obtained after pressing fresh tea leaf is also known. Indian Patent Number IN 195073 describes a process for the production of instant tea comprising the steps of obtaining freshly plucked green tea (two leaves and bud) crushing the leaves, extracting the juice thereof and subjecting the juice to the step of fermentation. The fermented juice is then steamed and centrifuged to arrest fermentation and to remove the colloidal and suspended materials. It is then dried either by freeze-drying or spray-drying to obtain instant tea. The residue of the leaves after juice extraction is subjected to fermentation and drying for manufacturing black tea.
The heating and other steps associated with the processing of tea juice has an effect on the aroma content of the product. The processing of this tea juice tends to lose the important aroma molecules that provide sensorial superiority to these products.
There is also prior art which discloses the recovery of aroma from tea.
WO2007/039018 (Unilever) describes a process for manufacturing a leaf tea product. The process comprises the steps of providing fresh tea leaf, recovering aroma from the fresh tea leaf, and drying the fresh tea leaf to form the leaf tea product. The aroma is recovered whilst at least partially drying the fresh leaf in a low-convection dryer.
WO 2011/069788 (Unilever) describes a process for the recovery of volatile aroma compounds from a vegetable material comprising the steps of:

  (a) contacting the vegetable material with a gas in a dryer wherein the amount of moisture in the gas entering the dryer is less than 15 g/kg dry gas; (b) contacting the dryer exhaust gas stream with water vapour or steam to obtain a gaseous mixture, and (c) condensing the gaseous mixture to recover a condensate comprising volatile aroma compounds.

WO 2009/059928 (Unilever) discloses a process comprising the steps of: expressing juice from fresh tea leaves thereby to produce leaf residue and juice comprising a mixture of tea compounds; fractionating the mixture; and recovering at least one fraction enriched in at least one tea compound.
Through extensive consumer research we have found that tea aroma with high floral notes is preferred by consumers. Though prior art discloses processes for aroma recovery, there has been provided no hint about recovering a tea aroma with high floral notes while producing a liquid tea juice and a leaf tea product simultaneously from the same leaf.
Therefore there is a need to provide a process for tea aroma recovery with high floral notes while producing liquid tea juice and a leaf product together from the same fresh tea leaf.

### Objects of the Invention

It is therefore an object of the present invention to provide a process for tea aroma recovery with high floral notes while producing a liquid tea juice product.
It is another object of the present invention to provide for a process which produces a tea juice with improved red colour.
The present inventors while working extensively on the colour improvement of liquid tea juice surprisingly found that the aroma recovered from tea juice which had been produced by pressing fermented tea leaf, has increased floral notes and that the tea juice has improved red colour. Additionally the present inventors found that aeration of the juice further enhances the floral notes in the recovered aroma.

**Summary of the invention**

Accordingly, in a first aspect the present invention provides a process comprising the steps of:

      a. macerating fresh tea leaves,
      b. fermenting the macerated tea leaves,
      c. expressing juice from fermented tea leaves thereby to produce leaf residue and tea juice,
      d. heating the juice to a temperature of 50 to 85°C for 15 to 150 minutes,
      e. collecting the vapour from the heated tea juice and condensing it to produce a condensate rich in tea aroma; and
      f. recovering the condensate.

wherein in step (d) the juice is aerated with a gas comprising oxygen and wherein in step (e), the vapour mixed with the gas is collected and condensed.

According to another preferred aspect the present invention provides a process of the first aspect wherein the tea juice obtained after the aroma recovery is separated as a tea juice product.

These and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

**Detailed description of the invention of the invention**

"Tea" for the purposes of the present invention means material from *Camellia sinensis var. sinensis* and/or *Camellia sinensis var. assamica.*

"Leaf tea" for the purposes of this invention means a tea product that contains tea leaves and/or stem in an un-infused form, and that has been dried to a moisture content of less than 30% by weight, and usually has a water content in the range 1 to 10% by weight (i.e. "made tea").

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" refers to tea leaves and/or stem that have never been dried to a water content of less than 30% by weight, and usually have water content in the range 60 to 90%.

As used herein the term "expressing juice" refers to squeezing out juice from tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the fermented leaves during the expression step.

The present invention provides a process comprising the steps of:

      a. macerating fresh tea leaves,
      b. fermenting the macerated tea leaves,
      c. expressing juice from fermented tea leaves thereby to produce leaf residue and tea juice,
      d. heating the juice to a temperature of 50 to 85°C for 15 to 150 minutes,
      e. collecting the vapour from the heated tea juice and condensing it to produce a condensate rich in tea aroma; and
      f. recovering the condensate.

wherein in step (d) the juice is aerated with a gas comprising oxygen and wherein in step (e), the vapour mixed with the gas is collected and condensed.

The fresh tea leaves may be obtained from *Camellia sinensis var. sinensis* and/or *Camellia sinensis var. assamica.*It is particularly preferred that the fresh tea leaves comprise material from *var. assamica* as this variety naturally has a high level of tea actives. The tea leaves may include leaf, buds, stem and other parts of the tea plant.

Step (a): maceration of fresh tea leaves

After the plucking the fresh tea leaves are subjected to maceration. This is preferably be carried out by crushing, tearing and curling which is known as CTC. One or more CTC steps may be carried out. Alternately the fresh tea leaves may be rolled in an orthodox roller or comminuted in a rotorvane or combination thereof. The essential objective of this step is to damage the tea leaf so that it releases enzymes which can then undergo fermentation to produce the necessary sensorials for tea.

Before maceration, it is preferable to subject the fresh tea leaves to a withering step. Withering is a process where plucked tea leaves are allowed to lose moisture over a period of time, preferably in a shallow trough where biochemical reactions occur causing formation of many beneficial compounds including aroma compounds. Preferably to speed-up the moisture losing process, fresh dry air is passed in a regulated manner through the leaves. Generally withering is carried out for a period of 10 to 18 hours, more preferably for 12 to 16 hours.

Step (b): Fermentation of the macerated tea leaf

The macerated leaf next undergoes fermentation. Fermentation is carried out by keeping the leaf at a temperature of 15-35°C for from 15 minutes to 3 hours. Preferably the temperature of the fermentation is between 25-35°C and more preferably around 30-35°C. The time for fermentation preferably is from 30 minutes to 3 hours, more preferably 1-3 hours. In this stage the leaf undergoes enzymatic reactions which produce the typical black tea characteristics. It has been found that fermentation of the tea leaf produces tea aroma with high floral notes when compared with product without fermentation.

Step (c): pressing out the juice from the fermented tea leaf

After fermentation, the tea leaves are pressed / squeezed to extract the juice. The amount of expressed juice is preferably at least 50 mL per kg of the fresh tea leaves. The expression step is may be achieved in any convenient way so long as it allows for separation of the tea juice from the leaf residue and results in the required quantity of juice. The machinery used to express the juice may, for example, be a hydraulic press, a pneumatic press, a screw press, a belt press, an extruder or a combination thereof. Then, the juice and the leaf residue may separated by filtration or centrifugal separation.

The juice may be obtained from the fermentated tea leaves in a single pressing or in multiple pressings of the tea leaves. Preferably the juice is obtained from a single pressing as this allows for a simple and rapid process.

In order to minimise generation of off-flavours in the leaf tea and/or juice, it is preferred that the expression step is performed at ambient temperature. For example, the leaf temperature may be from 5- 40 °C, more preferably 10-30 °C. The time and pressure used in the expression step can be varied to yield the specified amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

Step (d): treatment of the juice

After the juice has been expressed from the fermented leaves it then undergoes treatment to increase the sensorials of the resulting juice and to recover the aroma. The juice may be treated as follows:

The juice may be treated by heating it to a temperature of 50 to 85°C, preferably 60 to 85°C more preferably 65 to 85°C for about 15 to 150 minutes, preferably for 30 to 150 minutes and more preferably for 45 to 150 minutes. The heating is preferably carried out in a closed vessel to which a condenser is attached. More preferably the heating step is carried out in a rotary evaporator. The vacuum applied when a rotary evaporator is used is in the range of 100-400 mmHg, preferably 150 - 250 mmHg, more preferably 180 to 225 mmHg.

The tea juice that is collected after the heat treatment has improved red colour when reconstituted into a beverage by diluting with water.

During the heat treatment the juice is aerated with a gas comprising oxygen, for example by bubbling the gas through the juice. Then the mixture of vapour and gas is collected and condensed. We have found that this results in a much improved red colour when the juice is made into a beverage by diluting with water. It has been found that aeration of the juice leads to higher floral notes in the recovered aroma. When aeration is done on a juice which has been produced from a fermented tea leaf, the floral note in the recovered aroma is even better.

Step (e): Collection of the vapour

The vapour or vapour mixed with purged gas produced in step (d) is collected and passed through a condenser. The condenser condenses the vapour and the tea aroma is recovered/collected as a product. Steps (d) and (e) are preferably performed by using a rotary evaporator with an attached condenser. The condenser preferably has a jacket through which cold water is passed, preferably at a temperature in the range of -10 to 10°C, more preferably -5 to 5°C, most preferably 0 to 5°C.

The aroma collected in the condensate may further concentrated. The concentrated aroma may then be added to the tea juice product or any other leaf tea product.

Thus the process of the invention produces tea aroma and a liquid tea juice product.

The tea juice is preferably separated after the aroma recovery to produce a tea juice product. This tea juice product may further diluted with water to produce a tea based beverage. The tea based beverage thus obtained has improved red colour when compared with a similar product produced without using the process of the invention.

Making the tea-based beverage by diluting the tea juice product

There is no particular ratio in which the tea juice has to be diluted with water; it depends on the consumers taste and preference. The tea-based beverage is preferably made by combining 2 -16 mL of the tea juice of the invention with 150 - 200 ml of water. A cup full of a tea-based beverage generally measures about 150 - 200 mL. More preferably the amount of juice which is added to the water to make the beverage is in between 5 - 12 mL and most preferably in between 6 - 10 mL in 150 - 200 mL of water.

The temperature of the water to which juice is added to make the tea-based beverage of the invention may be in between 5°C to 100°C depending on the consumer's need and taste preference.

One of the ways of characterizing a tea beverage is by its colour characteristics i.e. L*, a* and b* values. These values indicate the color characteristics of a particular product. The International Commission on Illumination (CIE) introduced the CIE L*a*b* scale of colour measurement, based on the opponent-colours theory, which assumes that the receptors in the human eye perceive colour as the following pairs of opposites:

- Light-Dark
- Red-Green , and
- Yellow-Blue.

The CIE L*a*b* colour scale is an approximately uniform colour scale. In a uniform colour scale, the differences between points plotted in the colour space correspond to visual differences between the colours plotted. The CIE L*a*b* colour space is organized in a cube form. The L* axis runs from top to bottom. The maximum value for L* is 100, which represents a perfect reflecting diffuser. The minimum is L*=0, which represents black. The a* and b* axes have no specific numerical limits. Positive a* is red and negative a* is green. Similarly, positive b* is yellow and negative b* is blue.

CIE L*a*b* values can be measured using a color measuring instrument e.g. spectrophotometer, preferably a Hunterlab color measuring instrument. The colour measurements are preferably carried out under D65 illuminant. D65 is a standard illuminant defined by the CIE. The D65 illuminant is intended to represent average daylight throughout the visible spectrum.

The tea based beverage thus obtained has a redness value (a*) as measured on CIE L*a*b* scale using D65 illuminant of greater than 10, preferably greater than 11 and more preferably greater than 12. Although there is no particular upper limit of the a* value, it may well up to 35 or more preferably up to 30.

Optionally, the leaf fermented residue is processed further by drying it at a temperature of 80-130°C, preferably 90-130°C more preferably 100-130°C to obtain a leaf residue product.

Now the invention will be demonstrated with the help of examples. The examples are for the purpose of illustration of the invention and in no way limit the scope of the invention.

Examples

Process of recovering aroma from the liquid tea juice

Fresh tea leaves were collected from the Southern part of India. The leaves were withered for about 90 minutes by keeping them at 25°C in an open atmosphere. The leaves were then macerated by passing them through a CTC machine 4 times. The resulting dhool was then allowed to ferment at ambient conditions (~25°C and 70% relative humidity). After 60 minutes of fermentation, the dhool mechanically compressed using a pneumatic dewatering system at a pressure of 6kgf/cm$^2$. The pressure was applied, held for 1-2 minutes and then released. This process was repeated till the dhool stopped releasing juice. The amount of juice extracted by this process was ~30% by weight of the dhool. The juice was then divided equally into two batches.

Example 1:

The first batch was heated in a rotary evaporator (Labrota 5000, Heidolph) with the water bath at 70°C and an applied vacuum of 180-225 mmHg. The vapour released from the flask was condensed using a water cooled condenser at 2°C. The condensate was collected and analyzed. This treatment was continued until 10% of the total volume of juice was obtained as condensate. The remaining juice was diluted (8mL juice per 200mL water) to obtain a tea based beverage.

Example 2:

The second batch was heated in a rotary evaporator (Labrota 5000, Heidolph) with the water bath was maintained at 70°C whilst being aerated using a diaphragm pump. The mixture of vapour and air was condensed using a water cooled condenser at 2°C. The condensate was collected and analyzed. This treatment was continued until 10% of the total volume of juice was obtained as condensate. The remaining tea juice was diluted (8mL juice per 200mL water) to obtain a tea based beverage.

The total organic carbon content (TOC) of the condensates collected from the examples was measured using a Shimadzu total organic carbon analyzer (model no. 5000 A). The TOC value was used as an estimate to quantify the amount of organic volatiles in the condensate.

$$\text{Amount of aroma on TOC basis} = \frac{\text{TOC (ppm) x volume of aroma collected}}{\text{Dry weight of material used}}$$

Standard head space GC Analysis was performed on the condensates to determine the amounts of characteristic aroma compounds.

Example A:

As a comparative example, aroma was captured from dhool using a process which is known in the art. 1 kg of fresh tea leaves from Southern India having moisture content of ~80% by weight were withered to a moisture content of ~ 75 % by keeping them at room temperature (~ 25°C). Then the tea leaves were macerated by a CTC machine (4 passes) and then allowed to ferment by keeping the leaves at ~25°C for ~ 90 minutes. The fermented leaf was then dried in a low convection dryer (vacuum, Model- Labrota 5000 by Heidolph) to a moisture content of ~ 55%, where the ratio of the amount of inlet air to the amount of moisture evaporated was about 0. 05 kg /kg. The aroma condensate was collected using a condenser operated at 5°C.

Example B:

As another comparative example, aroma was captured without fermentation of the dhool. Fresh tea leaves from Southern India were withered for about 90 minutes by keeping them at 25°C in an open atmosphere. The leaves were then macerated by passing them through a CTC machine 4 times. The resulting dhool was mechanically compressed using a pneumatic dewatering system at a pressure of 6kgf/cm$^2$. The pressure was applied, held for 1-2 minutes and then released. This process was repeated till the dhool stopped releasing juice. The juice was then heated in a rotary evaporator (Labrota 5000, Heidolph) with the water bath at 70°C, whilst being aerated using a diaphragm pump. The mixture of vapour and air was condensed using a water cooled condenser at 2°C. The condensate was collected and analyzed. This treatment was continued until 10% of the total volume of juice was obtained as condensate. The remaining tea juice was diluted (8mL juice per 200mL water) to obtain a tea based beverage.

The results for all the examples are summarized in Table 1.

Table 1

|  | Example A | Example B | Example 1 | Example 2 |
|---|---|---|---|---|
| TOC (ppm, mg/L) | 333 | 301 | 289.3 | 348.9 |
|  |  |  |  |  |
| t-2hexanal (ppm) | 19.44 | 27.42 | 28.42 | 20.12 |
| C3-Hexenol (ppm) | 262.84 | 42.88 | 63.66 | 14.89 |
| 1-penten 3 ol (ppm) | 48.95 | 14.64 | 50.16 | 48.36 |
| Total green aroma volatile compounds (ppm) | 331.23 | 84.94 | 142.24 | 83.37 |
| Linalool (ppm) | 35.17 | 5.17 | 11.07 | 6.52 |
| Methyl Salicylate (ppm) | 7.73 | 0.27 | 1.85 | 0.53 |
| Ger (ppm) | 0 | 2.35 | 10.13 | 11.39 |
| Total floral aroma volatile compounds (ppm) | 42.9 | 7.80 | 23.05 | 18.44 |
|  |  |  |  |  |
| Floral aroma volatiles: Green aroma volatiles | 0.13 | 0.09 | 0.16 | 0.22 |

Table 1 shows that the process of the invention (Examples 1 and 2) provides tea aromas with a distinct and different aroma profile from that of Example A or B (prior art process for aroma recovery). It is also evident from the results that tea aroma obtained in Examples 1 and 2 have much higher floral notes than the aroma obtained by either Example A or from the dhool which did not undergo fermentation (Example B). The tea aroma obtained by the process of the invention has high floral notes, which is preferred by a number of consumers.

Colour measurement of the tea juice product

Colour (CIE L*a*b*) values were measured using a Hunter lab Ultrascan XE (Model-USXE/UNI version 3.4, Hunterlab Associates Laboratories Inc. Virginia). A halogen cycle lamp was used as the light source. The illuminant was D65 and the measurements were made at 10°-Observer angle. at room temperature (~25°C). Tea based beverages obtained by diluting 8 mL of tea juice (obtained from Examples 1 and 2 after aroma recovery) in 200 mL of water were filled up to the brim in a quartz cuvette of 10 mm path length, which was then placed in the instrument. The instrument was calibrated using a standard white tile (Hunterlab Duffuse/8°, mode-RSEX, Port-1" and area- large) in accordance with the instruction manual.

The redness (a*) values of the tea based beverage obtained from Examples 1 and 2 are summarized below in Table 2. A tea based beverage made by diluting 8mL of tea juice which had not been treated using the process of the invention in 200mL water was used as a control.

Table 2

| Example | Control | Example 1 | Example 2 |
|---|---|---|---|
| Redness value (a*) | 7.49 | 10.41 | 12.26 |
| Difference from the control | Not applicable | 2.92 | 4.77 |

From Table 2 it is clear that tea based beverages obtained using the process of the invention have a much higher (improved) red colour than that of the control.

An infusion from the leaf residue product was tasted by a group of highly trained tea tasters. After tasting they found that the leaf residue product obtained by the process of the present invention has similar sensorials as regular black tea.

**Claims**

1. A process comprising the steps of:

   a. macerating fresh tea leaves,
   b. fermenting the macerated tea leaves,
   c. expressing juice from fermented tea leaves thereby to produce leaf residue and tea juice,
   d. heating the juice to a temperature of 50 to 85°C for 15 to 150 minutes,
   e. collecting the vapour from the heated tea juice and condensing it to produce a condensate rich in tea aroma; and
   f. recovering the condensate ;

   wherein in step (d) the juice is aerated with a gas comprising oxygen and wherein in step (e), the vapour mixed with the gas is collected and condensed.

2. A process as claimed in claim 1 wherein there is an additional step of withering before macerating the fresh tea leaf.

3. A process as claimed in claim 3 wherein the gas is air.

4. A process as claimed in any one of the preceding claims wherein a vacuum of 100 - 400 mmHg is applied while heating the juice.

5. A process as claimed in any one of the preceding claims wherein the temperature is from 60 to 85°C.

6. A process as claimed in any one of the preceding claims wherein the tea juice obtained after the aroma recovery is separated as a tea juice product.

7. A process as claimed in claim 6 wherein the tea juice is diluted with water to produce a tea based beverage.

8. A process as claimed in any one of the preceding claims wherein the condensate is subsequently concentrated.

9. A process as claimed in any one of the preceding claims further comprising the step of adding back the aroma to the tea juice or to a leaf tea product.

10. A process as claimed in any one of the preceding claims wherein the leaf residue is dried at a temperature of 80 to 130°C to obtain a leaf tea product.


**Patentansprüche**

1. Verfahren umfassend die Schritte:

   a. Einweichen von frischen Teeblättern,
   b. Fermentieren der eingeweichten Teeblätter,
   c. Auspressen von Saft aus fermentierten Teeblättern, um dadurch Blattrückstand und Teesaft herzustellen,
   d. 15 bis 150 Minuten langes Erwärmen des Teesaftes auf eine Temperatur von 50 bis 85°C,
   e. Sammeln des Dampfes aus dem erwärmten Teesaft und dessen Kondensation, um ein an Teearoma reiches Kondensat herzustellen; und
   f. Zurückgewinnen des Kondensates,

   wobei in Schritt (d) der Saft mit einem Sauerstoff umfassenden Gas durchlüftet wird und wobei in Schritt (e) der mit dem Gas gemischte Dampf gesammelt und kondensiert wird.

2. Verfahren gemäß Anspruch 1, wobei vor dem Einweichen der frischen Teeblätter ein zusätzlicher Schritt des Austrocknens stattfindet.

3. Verfahren gemäß Anspruch 1, wobei das Gas Luft ist.

4. Verfahren gemäß irgendeinem der vorhergehenden Ansprüche, wobei während des Erwärmens des Saftes ein Vakuum von 100 bis 400 mmHg angelegt wird.

5. Verfahren gemäß irgendeinem der vorhergehenden Ansprüche, wobei die Temperatur 60 bis 85°C beträgt.

6. Verfahren gemäß irgendeinem der vorhergehenden Ansprüche, wobei der nach der Rückgewinnung von Aroma erhaltene Teesaft als ein Teesaftprodukt abgetrennt wird.

7. Verfahren gemäß Anspruch 6, wobei der Teesaft mit Wasser verdünnt wird, um ein Getränk auf Teegrundlage herzustellen.

8. Verfahren gemäß irgendeinem der vorhergehenden Ansprüche, wobei das Kondensat anschließend konzentriert wird.

9. Verfahren gemäß irgendeinem der vorhergehenden Ansprüche, ferner umfassend den Schritt, dem Teesaft oder einem Blatt-Teeprodukt das Aroma wieder zu vermitteln.

10. Verfahren gemäß irgendeinem der vorhergehenden Ansprüche, wobei der Blattrückstand bei einer Temperatur von 80 bis 130°C getrocknet wird, um ein Blatt-Teeprodukt zu erhalten.


**Revendications**

1. Procédé comprenant les étapes suivantes :

   a. macération de feuilles de thé fraîches,
   b. fermentation des feuilles de thé macérées,
   c. expression du jus des feuilles de thé fermentées pour ainsi produire un résidu foliaire et du jus de thé,
   d. chauffage du jus à une température de 50 à 85 °C pendant 15 à 150 minutes,
   e. collecte de la vapeur du jus de thé chauffé et condensation de celle-ci pour produire un condensat riche en arôme de thé ; et
   f. récupération du condensat ;

   dans lequel dans l'étape (d) le jus est aéré à l'aide d'un gaz comprenant de l'oxygène et dans lequel dans l'étape (e), la vapeur mélangée avec le gaz est collectée et condensée.

2. Procédé tel que revendiqué dans la revendication 1 dans lequel il existe une étape additionnelle de flétrissement avant la macération de la feuille de thé fraîche.

3. Procédé tel que revendiqué dans la revendication 3 dans lequel le gaz est de l'air.

4. Procédé tel que revendiqué dans l'une quelconque des revendications précédentes dans lequel un vide de 100 à 400 mm d'Hg est appliqué pendant le chauffage du jus.

5. Procédé tel que revendiqué dans l'une quelconque des revendications précédentes dans lequel la température est de 60 à 85 °C.

6. Procédé tel que revendiqué dans l'une quelconque des revendications précédentes dans lequel le jus de thé obtenu après la récupération de l'arôme est séparé sous la forme d'un produit de jus de thé.

7. Procédé tel que revendiqué dans la revendication 6 dans lequel le jus de thé est dilué avec de l'eau pour produire une boisson à base de thé.

8. Procédé tel que revendiqué dans l'une quelconque des revendications précédentes dans lequel le condensat est ensuite concentré.

9. Procédé tel que revendiqué dans l'une quelconque des revendications précédentes comprenant en outre l'étape consistant à rajouter l'arôme au jus de thé ou à un produit de thé en feuilles.

10. Procédé tel que revendiqué dans l'une quelconque des revendications précédentes dans lequel le résidu foliaire est séché à une température de 80 à 130 °C pour obtenir un produit de thé en feuilles.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009059924 A, UNILEVER
- WO 2009098231 A, UNILEVER
- IN 195073

- WO 2007039018 A, Unilever
- WO 2011069788 A, Unilever
- WO 2009059928 A, Unilever